# EUROPÄISCHE PATENTANMELDUNG

(11) **EP 2 923 770 A1**
(43) Veröffentlichungstag der Anmeldung: **30.09.2015**
(21) Anmeldenummer: 14161808.2
(22) Anmeldetag: 26.03.2014
(51) Int. Cl.: B05B 1/26, F02C 7/143, F23R 3/28, B05B 1/04, F04D 29/58

(54) **Bauteil für eine thermische Strömungsmaschine sowie Verfahren zum Zerstäuben einer Flüssigkeit in einem Strömungspfad einer thermischen Strömungsmaschine**

(71) Anmelder: Siemens Aktiengesellschaft, 80333 München (DE)
(72) Erfinder: Beiler, Jan-Dirk, 45473 Mülheim a.d. Ruhr (DE); Eisfeld, Tjark, Dr., 45478 Mülheim a.d. Ruhr (DE); Schnitzler, Jan-Philipp, 40223 Düsseldorf (DE); Werner, Klaus, Dr., 47574 Goch (DE)

(57) **Zusammenfassung**

Die Erfindung betrifft ein Bauteil für eine thermische Strömungsmaschine zum Zerstäuben einer Flüssigkeit in einer gasförmigen Strömung. Weiter betrifft die Erfindung ein Verfahren zum Zerstäuben einer Flüssigkeit in einem Strömungspfad einer thermischen Strömungsmaschine. Um in einem Nassverdichtungsbetrieb fein verteilte Flüssigkeitstropfen in einen gasförmigen Verdichtermassenstrom eindüsen zu können, wird vorgeschlagen, dass ein den Strömungspfad der Strömungsmaschine begrenzendes Bauteil zumindest zwei Kanäle aufweist, die in einer dem Strömungspfad zugewandten Oberfläche des Bauteils münden, wobei die beiden Kanäle unter Bildung eines Kanalpaares derart ausgestaltet und zueinander ausgerichtet sind, dass die aus den Kanälen des Kanalpaares austretbaren Flüssigkeitsstrahlen sich zum gegenseitigen Zerstäuben zumindest teilweise, vorzugsweise vollständig treffen.

## Beschreibung

Die Erfindung betrifft ein Bauteil für eine thermische Strömungsmaschine zum Zerstäuben einer Flüssigkeit in einer gasförmigen Strömung. Weiter betrifft die Erfindung ein Verfahren zum Betreiben einer thermischen Strömungsmaschine.

Beim sogenannten Nassverdichtungsbetrieb (im Englischen auch als Wet Compression bekannt) werden fein verteilte Flüssigkeitstropfen in einen gasförmigen Verdichtermassenstrom eingedüst, um die zur Kompression erforderliche Leistung des Verdichters zu verringern. Gleichzeitig wird der Massenstrom des Verdichters erhöht, was bei der Verwendung des Verdichters in einer Gasturbine zur weiteren Leistungssteigerung beiträgt.

Bei der Einspritzung von Wasser in die Verdichterluft sind zur Optimierung der Verdampfung möglichst kleine Tropfendurchmesser gefordert. Insbesondere bei der Einspritzung im Verdichter stehen nur kurze Verdampfungszeiten und kurze Verdampfungsstrecken zur Verfügung, so dass sich die durch möglichst viele kleine Tropfen ergebende große Wärmeübertragungsoberfläche positiv auf die beabsichtigte Kühlung der Luft auswirkt.

Bisher wurde versucht, durch bestimmte Düsenkonfigurationen kleine Tropfen zu erzeugen. Bei der Swirl Flash Technologie wird z.B. das Wasser auf erhöhten Druck und erhöhte Temperatur gebracht, bevor es durch eine drallerzeugende Düse austritt.

Diese Ausgestaltungen sind jedoch nachteilig, insbesondere wegen der raumgreifenden Düsen. Zwar sind derartige Düsen schon vergleichsweise kleinbauend. Jedoch besteht weiterhin Bedarf an einer Miniaturisierung der Düsen, da diese insbesondere in Verdichterschaufeln angewendet werden sollen, deren Schaufelblätter jedoch wiederum sehr schlank ausgeführt sind. Aufgrund der schlanken Ausführungen ist die Verwendung der bisherigen Düsen an Schaufelblättern nicht denkbar, ohne dass diese Düsen aus deren bisherigen Schaufelblattoberflächen herausragen. Damit würden sie die Verdichterströmung unzulässig stark stören.

Auch die Montage der bekannten Düsen an den äußeren Wänden des Verdichters ist aufwändig. Auch diese Düsen ragen ggf. in die Strömungspfade des Verdichters ein, was die Aerodynamik stört.

Aus diesem Grunde besteht das Bedürfnis an einer vergleichsweise kleinbauenden Düse, die einfach montierbar bzw. herstellbar ist und mit der Flüssigkeitstropfen einer gasförmigen Strömung zugeführt werden können, die vergleichsweise klein und gleichmäßig verteilt sind.

Diese Aufgabe wird mit einem Bauteil gemäß der Ansprüche 1 bis 8 bzw. mit einer Verdichterschaufel nach einem der Ansprüche 9 bis 12 sowie mit einem Strömungspfad nach einem der Ansprüche 13 oder 14 und mit einem Verfahren nach einem der Ansprüche 15 bis 20 gelöst.

Weitere vorteilhafte Ausführungsformen sind in den Unteransprüchen angegeben.

Allen Lösungen liegt die gemeinsame erfinderische Idee zugrunde, dass zur Zerstäubung einer Flüssigkeit in einer gasförmigen Strömung zwei aus einer Wand austretende und in den Strömungspfad eintretende Flüssigkeitsstrahlen aufeinander treffen und sich dabei gegenseitig zerstäuben. Die Vorrichtungen müssen mithin zumindest zwei Kanäle aufweisen, die geometrisch so zueinander angeordnet sind, dass die aus den Kanälen des Kanalpaares austretbaren Flüssigkeitsstrahlen sich zum gegenseitigen Zerstäuben zumindest teilweise, vorzugsweise jedoch vollständig treffen.

Die erfindungsgemäße Zerstäuber-Anordnung ist somit modular ausgestaltet und umfasst in der Regel zwei, beispielsweise durch Bohren hergestellte Kanäle, die einerseits in der Oberfläche des Bauteils münden und andererseits in einem gemeinsamen oder getrennt ansteuerbaren Versorgungskanal. Durch den Versorgungskanal wird den beiden Kanälen die zu zerstäubende Flüssigkeit vorzugsweise mit hohem Druck zugeführt.

Nach dem Aufeinandertreffen der beiden Flüssigkeitsstrahlen bildet sich ein fächerförmiges Strömungsbild der Flüssigkeitstropfen, dessen Ausrichtung um 90° gedreht ist zu einer gedachten Verbindungslinie der beiden Kanalöffnungen, wenn deren Kanäle nur zueinander geneigt und deren Projektionen ansonsten parallel zueinander sind.

Als Flüssigkeit kann Wasser oder Brennstoff, beispielsweise Diesel, verwendet werden. Im letzteren Fall wäre das Bauteil dann ein Brenner.

Der besondere Vorteil liegt darin, dass die zur Zerstäubung erforderlichen Anordnungen nicht wie bisherige Düsen in den Strömungspfad hineinragen. Mithin kann die gasförmige Strömung trotz Anwesenheit des Zerstäubers ungestört entlang dieser vorbeiströmen. Dies ermöglicht einen verlustarmen Betrieb der thermischen Strömungsmaschine, ungeachtet dessen, ob eine Flüssigkeit in der gasförmigen Strömung untergemischt werden soll oder nicht.

Zwei erfindungsgemäß aufeinandertreffende Flüssigkeitsstrahlen führen zu einer Tropfenverteilung, die die Wassereinspritzung in den Verdichter begünstigt. Es wurde nach ersten Versuchen ein kleines D32-Tropfendurchmesserspektrum (Mittlerer Sauter Durchmesser) erreicht. Außerdem begünstigt die dabei entstehende Strömungsform nach Aufeinandertreffen beider Strahlen eine Einspritzung, insbesondere im Verdichter. Die Form der Einspritzung kann z.B. so sein, dass in eine Verdichterschaufel zwei Bohrungen mit kleinem, konstantem Durchmesser so eingebracht werden, dass sich bei Wassereinspritzung die austretenden Strahlen oberflächennah für eine effiziente Zerstäubung sorgen. Das Strömungsbild der Wassertropfen nach Aufeinandertreffen beider Strahlen ist dabei fächerförmig ausgebildet, wobei die Ausrichtung des Fächers um 90° zu der gedachten Verbindungslinie der beiden Bohrungen (= Kanälen) gedreht ist.

Besonders bevorzugt ist diejenige Ausführungsform, bei der mindestens zwei Kanalpaare derartig zueinander angeordnet sind, dass deren jeweilige Fächer aus Flüssigkeitstropfen sich einander schneiden. Beispielsweise können die Öffnungen von vier Kanälen in Rautenform angeordnet sein. Vorzugweise kreuzen sich die gedachten Verbindungslinien der mindestens zwei Kanalpaare unter Bildung eines Winkels α, für den gilt: α = 180°/n; mit n = Anzahl Kanalpaare.

Als Fortführung dieser Konfiguration sind Bohrungsmuster denkbar, die kreisförmig um einen fiktiven Mittelpunkt eingebracht werden, und zwar so, dass sich bei Einspritzung jeweils zwei gegenüberliegende Strahlen treffen. Das Ergebnis können mehrere fächerförmige Tropfenverteilungen sein, die quasi einen Kegel mit sehr kleinen Tropfendurchmessern bilden.

Insbesondere die letzte Variante könnte dazu führen, dass diese besondere Art der Einspritzung nicht nur mit Wasser und Verdichterschaufeln, sondern auch mit Brennstoff und Gasturbinenbrennern zu verbesserten Einspritzergebnissen führen. Beispielsweise können die Drallgitter von Brennern analog zu den aus erfindungsgemäßen Verdichterschaufeln bestehenden Gittern ausgestaltet sein.

Vorteile der Zweistrahleinspritzungen wären zum Ersten die relativ einfache Einbringung in (Hohl-)Schaufeln, z.B. durch Laserstrahlen, da hier auf den Einbau bisheriger Düsen verzichtet werden kann. Zum Zweiten bilden sich kleine Tropfenspektren aus, die insbesondere bei der Einspritzung der Flüssigkeit in den Verdichter bzw. in den Brenner eine effiziente Umsetzung der Flüssigkeitseinbringung in die gasförmige Strömung in Richtung Leistungs- und Wirkungsgradsteigerung des Gasturbinenprozesses ermöglichen. Eine entsprechende Einspritzung im Verdichter könnte darüber hinaus das zurzeit bestehende Limit für Wet Compression Betrieb, nämlich mindestens 10°C Verdichtereintrittstemperatur, unnötig machen. Darüber hinaus ist eine gleichmäßige Verteilung der Wassermenge über den Umfang durch die bestehende Anordnung der Schaufeln einer Verdichterleitscheibe (= Reihe von Verdichterleitschaufeln) gegeben.

Die zumindest ein Kanalpaar aufweisende Verdichterschaufeln können als Leit- und/oder als Laufschaufeln ausgebildet sein. Auch ist möglich, dass das zumindest eine Kanalpaar an einer den Strömungspfad der gasförmigen Strömung begrenzenden Wand angeordnet ist.

Die Erfindung wird anhand eines Verdichters einer stationären Gasturbine beispielhaft erläutert. Dieses Beispiel ist nicht einschränkend.

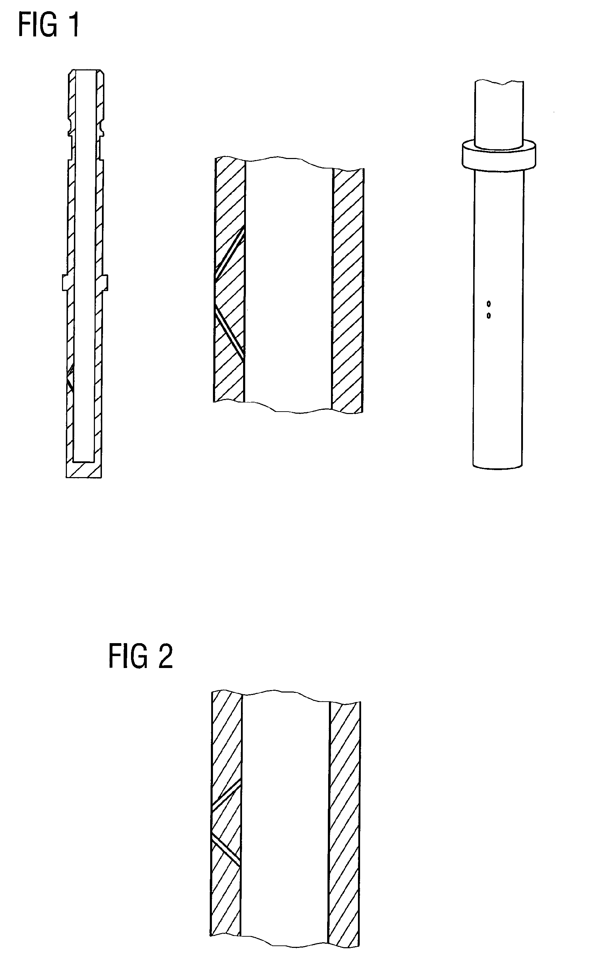

Erste Versuche wurden mit insgesamt drei Düsenlanzen durchgeführt. Die erste Düsenlanze hat die Bohrungen bei 50% der Schaufelhöhe. Die beiden Wasserstrahlen treffen bei dieser Düsenlanze unter einem Winkel von 120° aufeinander. In FIG 1 sind maßstäbliche Bauteilzeichnungen und eine Fotografie der Düsenlanze der ersten Variante abgebildet.

Die zweite angefertigte Düsenlanze hat zwei Bohrungen, deren Schnittpunkt auf der Höhe von 25% der Schaufelhöhe liegt. Die Wasserstrahlen treffen sich, wie bei der ersten Variante, unter einem Winkel von 120°.

Als dritte Variante wurde gemäß der maßstäblichen FIG 2 eine Düsenlanze angefertigt, die zwei Bohrungen aufweist, deren Schnittpunkt auf der Höhe von 50% der Schaufelhöhe liegt. Die Wasserstrahlen treffen sich bei Variante drei unter einem Winkel von 90°.

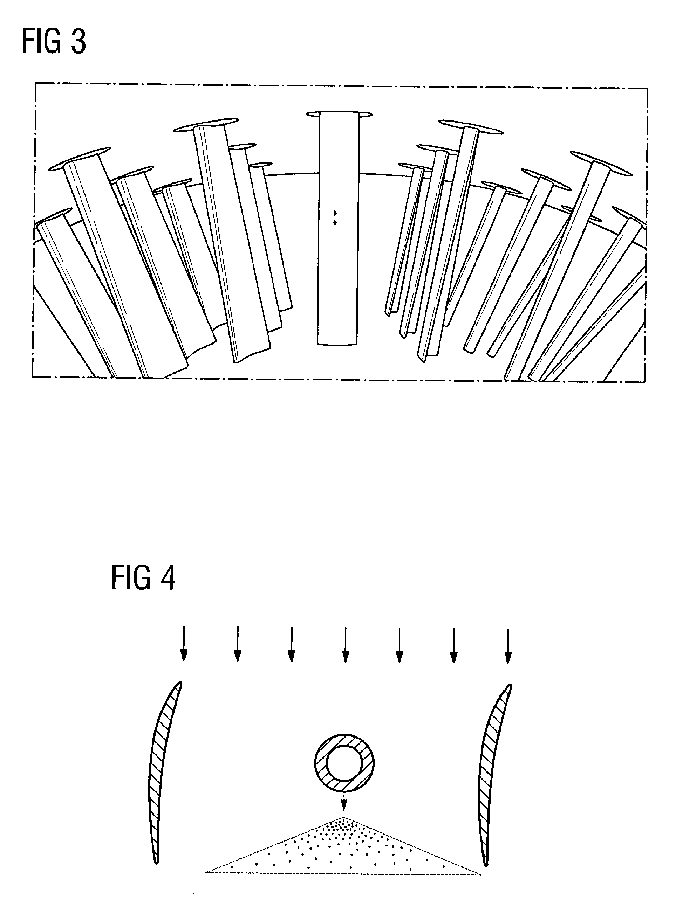

FIG 3 zeigt die Test-Anordnung.

Die entsprechende schematische Darstellung der Wassereindüsung in Strömungsrichtung zeigt FIG 4.

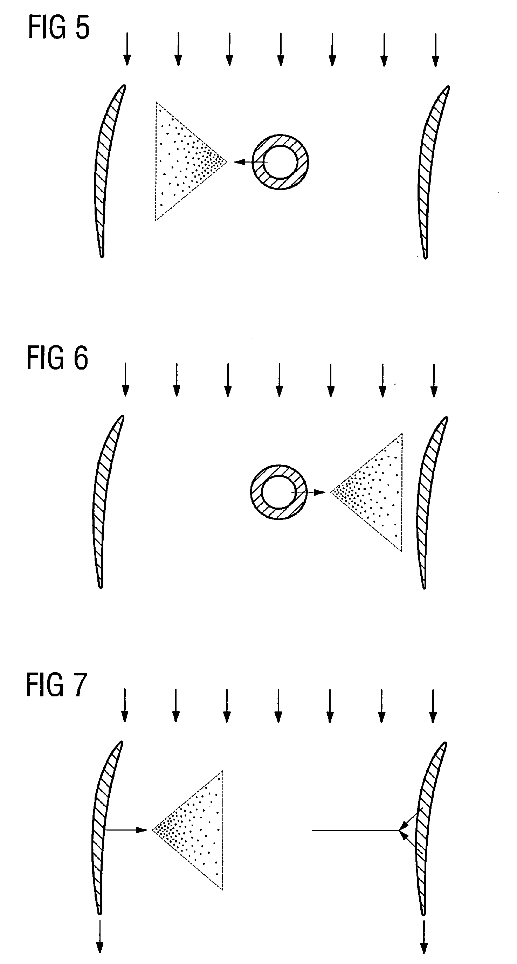

Darüber hinaus sind auch Varianten vorstellbar, bei denen die Richtung der Eindüsung gegenüber der Hauptströmungsrichtung variiert wird, was in den Figuren 5 und 6 gezeigt ist:
Die Bohrungen sind an der Saugseite bzw. an der Druckseite der Düsenlanze angeordnet.

In Erweiterung dieses ersten Versuchsansatzes ist statt des Hohlzylinders mit den Bohrungen eine Hohlschaufel mit entsprechenden Bohrungen, z.B. an der Hinterkante, denkbar.

Dies zeigt FIG 7 schematisch, wobei die in den Verdichterschaufeln angeordneten Versorgungskanäle zum Zuführen der Flüssigkeit zu den Kanälen nicht dargestellt sind.

Vorzugsweise wird anstelle der Lanzen die Flüssigkeit direkt durch die Hinterkante der Verdichterschaufeln, und/oder auf der Saugseite und/oder Druckseite der Verdichterschaufeln ausgespritzt. Die saug- und/oder druckseitige Ausblasung hat den Vorteil, dass der Fächer so orientiert sein kann, dass dessen Fläche vorzugsweise senkrecht zur (Haupt-)Strömungsrichtung im Verdichter steht. Letzteres ist in FIG 7 rechts dargestellt.

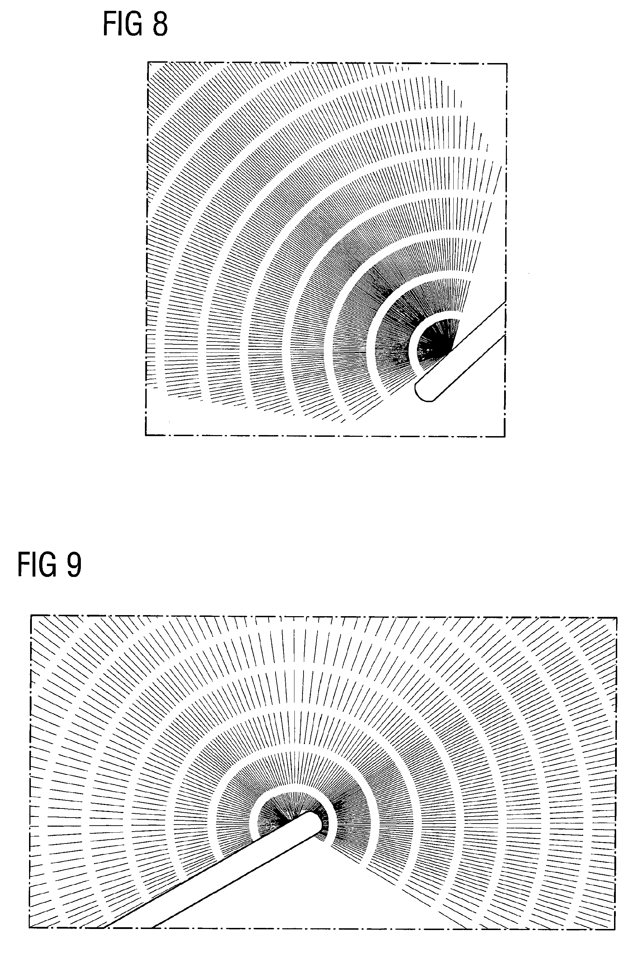

In FIG 8 und 9 sind Vorversuche mit einer Düsenlanze in ruhender Luft bei einem geringen Wasserdruck abgebildet.

Bei einem geringen Wasserdruck ist die Entstehung des Sprühfächers durch das Aufeinandertreffen der beiden Wasserstrahlen sehr gut zu erkennen. Um den Auftreffpunkt bildet sich ein runder Wasserfächer, der nach wenigen Millimetern in einen feinen Tropfennebel aufbricht.

Mit zunehmendem Wasserdruck ist die Ausbildung des Sprühfächers nicht mehr so gut zu erkennen, der Sprühnebel ist sehr viel feiner und der Wassermassenstrom deutlich höher, als bei einem geringen Wasserdruck.

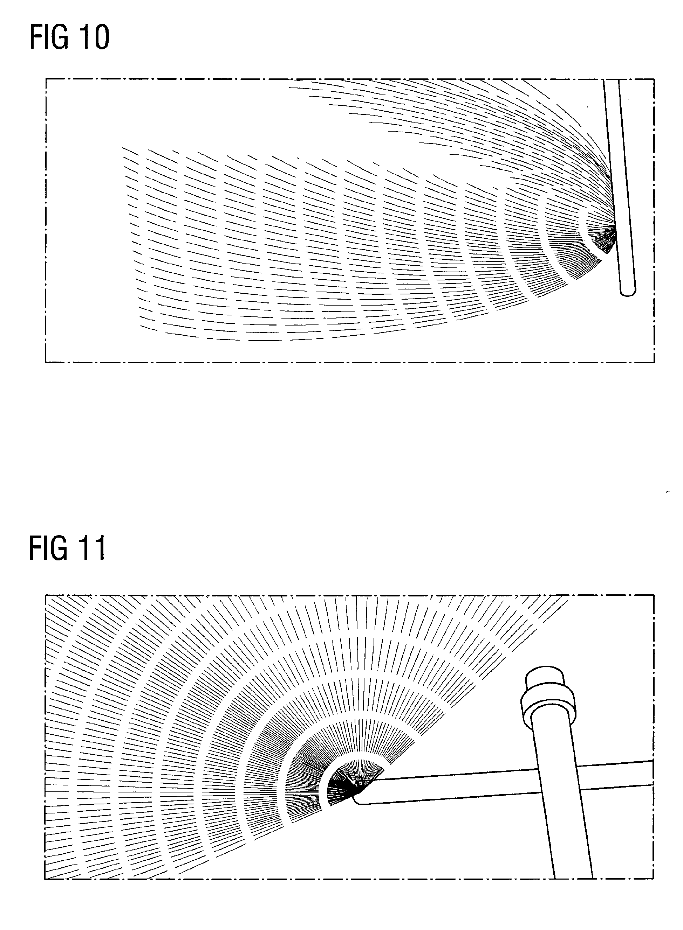

Die Düsenlanzen in allen drei Konfigurationen bilden bei einem hohen Versorgungsdruck von 50 bar bis 150 bar Sprühfächer in horizontaler Richtung unter einem Winkel von 140° bis 180° aus. Wie in den Fig. 10 und 11 gezeigt, weist in vertikaler Richtung der Sprühfächer nur eine geringe Ausdehnung auf, die in Abhängigkeit vom Wasserdruck zwischen 50 mm und 100 mm liegt.

Die in den Figuren und in der Beschreibung angegebenen Ausführungsbeispiele lassen sich zudem in beliebiger Weise miteinander kombinieren.

## Patentansprüche

1. Bauteil für eine thermische Strömungsmaschine,
mit zumindest zwei Kanälen, die in einer einem Strömungspfad der Strömungsmaschine zugewandten Oberfläche des Bauteils münden,
wobei die beiden Kanäle unter Bildung eines Kanalpaares derart ausgestaltet und zueinander ausgerichtet sind, dass die aus den Kanälen des Kanalpaares austretbaren Flüssigkeitsstrahlen sich zum gegenseitigen Zerstäuben zumindest teilweise, vorzugsweise vollständig treffen.

2. Bauteil nach Anspruch 1,
bei dem die Kanäle der Kanalpaare geradlinig sind und/oder zu einem gemeinsamen Versorgungskanal führen.

3. Bauteil nach Anspruch 1 oder 2,
bei dem die Kanäle zumindest unmittelbar vor der Mündung einen gleichbleibenden Querschnitt aufweisen.

4. Bauteil nach Anspruch 1, 2 oder 3,
welches mehrere Kanalpaare aufweist.

5. Bauteil nach Anspruch 4,
bei dem die Öffnungen der Kanäle zumindest zweier Kanalpaare so zueinander angeordnet sind, dass die beiden sich durch das betreffende Kanalpaar ausbildenden Fächer von Flüssigkeitstropfen einander schneiden.

6. Bauteil nach einem der Ansprüche 1 bis 5,
bei dem die Kanäle durch (Laser-) Bohren hergestellt sind und insbesondere einen Durchmesser von 5 mm und kleiner aufweisen.

7. Bauteil nach einem der Ansprüche 1 bis 6,
ausgestaltet als Lanze oder als Brenner.

8. Bauteil nach einem der Ansprüche 1 bis 6, ausgestaltet als Verdichterschaufel,
umfassend:
- einen Schaufelfuß,
- eine Plattform,
- ein von der Plattform abstehendes Schaufelblatt, welches aerodynamisch gekrümmt sich von einer Vorderkante zu einer Hinterkante erstreckt.

9. Verdichterschaufel nach Anspruch 8,
bei der die beiden Kanäle des betreffenden Kanalpaares in der Hinterkante des Schaufelblatts münden.

10. Verdichterschaufel Anspruch 8 oder 9,
bei der die beiden Kanäle des betreffenden Kanalpaares in einer Saugseite und/oder in einer Druckseite des Schaufelblatts münden.

11. Verdichterschaufel nach Anspruch 10,
bei der die eine der beiden Kanalmündungen - bezogen auf eine Umströmungsrichtung des Schaufelblatts - stromauf der anderen (der beiden Kanalmündungen) angeordnet ist.

12. Verdichterschaufel nach einem der Ansprüche 8 bis 11, bei der der eine der beiden Kanäle des betreffenden Kanalpaares im Schaufelblatt mündet und der andere der beiden Kanäle des betreffenden Kanalpaares in der Plattform.

13. Strömungspfad für eine thermische Strömungsmaschine, umfassend
a) zumindest eine den Strömungspfad begrenzende Wand und
b) zumindest zwei in den Strömungspfad hineinragende Elemente,
wobei zumindest ein Kanalpaar vorgesehen ist, dessen beide Kanäle derart ausgestaltet und zueinander ausgerichtet sind, dass die aus den Kanälen des Kanalpaares austretbaren Flüssigkeitsstrahlen sich zum gegenseitigen Zerstäuben zumindest teilweise, vorzugsweise vollständig treffen, wobei der eine der beiden Kanäle in einem der beiden Elemente
und der andere der beiden Kanäle in dem anderen der beiden Elemente oder in der Wand angeordnet ist.

14. Strömungspfad nach Anspruch 13,
bei dem die Elemente als Lanzen und/oder als Schaufelblätter ausgestaltet sind.

15. Verfahren zum Zerstäuben einer Flüssigkeit in einem Strömungspfad einer thermischen Strömungsmaschine, **gekennzeichnet durch** die Schritte,
- Zuführen einer Flüssigkeit zu einem Paar Kanäle, welche Kanäle
a) in einem in einen Strömungspfad einer Turbomaschine hineinragenden Bauteil und/oder
b) in einem den Strömungspfad begrenzenden Bauteil angeordnet sind und
- Ausspritzen eines Flüssigkeitsstrahls aus jedem der beiden Kanäle, derart, dass die beiden Flüssigkeitsstrahlen im Strömungspfad sich treffen und sich gegenseitig zumindest teilweise zerstäuben.

16. Verfahren nach Anspruch 15,
bei dem als Flüssigkeit Wasser verwendet wird und die thermische Strömungsmaschine als Verdichter ausgestaltet ist.

17. Verfahren nach Anspruch 15,
bei dem als Flüssigkeit Brennstoff verwendet wird.

18. Verfahren nach Anspruch 15,
bei dem der Strömungspfad als Vormischstrecke eines Brenners oder als Brennraum eines Diffusionsbrenners ausgestaltet ist.

19. Verfahren nach einem der Ansprüche 15 bis 18,
bei dem der Versorgungsdruck der Flüssigkeit so gewählt ist, dass sich ein Strömungsbild der Flüssigkeitstropfen nach dem Aufeinandertreffen der beiden Flüssigkeitsstrahlen ausbildet, welches fächerförmig ist.

20. Verfahren nach Anspruch 19,
bei dem mindestens zwei Kanalpaare so zueinander angeordnet sind, dass deren Fächer sich unter einem Winkel schneiden.

21. Verwendung von zumindest einem Paar Kanäle
a) in einem in einen Strömungspfad einer thermischen Strömungsmaschine hineinragenden Bauteil und/oder
b) in einem den Strömungspfad begrenzenden Bauteil, wobei die beiden Kanäle des Paares derart zueinander angeordnet sind, dass die aus den Kanälen des Kanalpaares austretbare Flüssigkeitsstrahlen sich zum gegenseitigen Zerstäuben zumindest teilweise treffen.
